# FASCICULE DE BREVET EUROPEEN

(11) **EP 0 619 278 B1**
(45) Date de publication et mention de la délivrance du brevet: **15.06.2005**
(21) Numéro de dépôt: 94400747.5
(22) Date de dépôt: 06.04.1994
(51) Int. Cl.: C04B 28/08, B09B 3/00

(54) **Procédé de stabilisation et de solidification de déchets polluants, produits obtenus par ce procédé, et produits pour le mettre en oeuvre**
Verfahren zur Stabilisierung und Verfertigung von umweltbelastenden Abfällen, daraus hergestellte Produkte, und Produkte zur Durchführung des Verfahrens
Process for stabilising and solidifying pollutant waste materials, products thus obtained and products for carrying out this process

(30) Priorité: 06.04.1993 FR 9304059
(43) Date de publication de la demande: 12.10.1994
(73) Titulaire: COMPAGNIE DU SOL, 92000 Nanterre (FR)
(72) Inventeur: Bouchelaghem, Abdelkrim, F-75019 Paris (FR); Cojan, Jean Yves, F-94160 St-Mande (FR); Gouvenot, Daniel, F-92110 Clichy (FR)
(74) Mandataire: Joly, Jean-Jacques

(56) Documents cités:
- EP-A- 0 547 923
- CA-A- 2 079 507
- GB-A- 2 224 024
- DATABASE WPI Week 8410, Derwent Publications Ltd., London, GB; AN 84-059813 & JP-A-59 018 147 (NIPPON CEMENT KK) 30 Janvier 1984
- DATABASE WPI Week 8110, Derwent Publications Ltd., London, GB; AN 81-16277D & JP-A-55 167 077 (NIPPON KOKAN KK) 27 Décembre 1980
- DATABASE WPI Week 8248, Derwent Publications Ltd., London, GB; AN 82-03584J & JP-A-57 172 976 (TOKUYAMA SODA KK) 25 Octobre 1982

## Description

La présente invention a pour objet un nouveau procédé de stabilisation et de solidification de déchets polluants, les produits obtenus par ce procédé, ainsi que les produits pour le mettre en oeuvre.

On sait que différentes législations et réglementations imposent de plus en plus fréquemment de rendre inertes les déchets polluants avant de les stocker dans des décharges.

Selon une technique connue, on mélange les déchets polluants avec un produit qui fait prise et qui constitue une matrice aussi compacte que possible, dans laquelle les déchets sont emprisonnés.

On limite ainsi les échanges entre les déchets et le monde extérieur.

On sait également que selon cette technique il est nécessaire d'obtenir des produits solides qui présentent des caractéristiques identiques dans tout leur volume, ce qui interdit par exemple de réaliser des produits tels que des coquilles qui présentent seulement des caractéristiques intéressantes au voisinage de leur surface.

C'est ainsi qu'il est connu de mélanger des déchets polluants avec du ciment Portland auquel on ajoute des produits fluidifiants ou des agents réducteurs d'eau, ce qui permet de mettre les déchets polluants sous forme de produits solides peu susceptibles d'être délavés par les eaux de pluie ou les eaux contenues dans le sol.

Il est également connu d'ajouter au ciment Portland de la chaux et éventuellement de la poudre de laitier de haut-fourneau.

Il est aussi connu d'introduire de l'argile dans le mélange, pour améliorer l'étanchéité du liant.

Ces procédés donnent généralement satisfaction pour la rétention des métaux lourds mais ils sont le plus souvent insuffisants vis-à-vis des produits solubles tels que les chlorures.

Selon une autre technique connue, on traite les déchets avec un mélange de ciment Portland et de silicate soluble (liqueur de silice) dans lesquels le rapport molaire SiO₂/Na₂O est généralement de l'ordre de 3,3.

La silice présente dans le silicate est très active, de sorte qu'elle peut agir sur la chaux du ciment (Ca⁺⁺) et sur les cations métalliques (Hg, Pb, Cd etc...) des déchets polluants pour former des précipités de silicate métalliques qui sont généralement peu solubles.

Toutefois, il n'est pas toujours facile de maîtriser la compétition entre les différents cations vis-à-vis de la silice et il en résulte que les compositions à base de ciment Portland et de silicate sont relativement performantes pour retenir les cations métalliques mais qu'elles le sont beaucoup moins à l'égard des substances polluantes solubles et des matières organiques.

De surcroît, ces différents procédés connus conduisent à des réactions mal maîtrisées dont le caractère exothermique provoque des fissures ou des microfissures au sein du produit solide obtenu, ce qui va à l'encontre du but recherché en favorisant les échanges entre les déchets ainsi compactés et le monde extérieur.

La présente invention a pour but de réaliser une matrice permettant d'enrober efficacement des déchets polluants, matrice dont la prise n'est pas perturbée par les constituants des déchets et qui de ce fait n'est pas détériorée par des fissures ou des microfissures.

La présente invention a pour objet un procédé pour traiter des déchets polluants en les incorporant dans un liant pour former des blocs de volume important, caractérisé par le fait que l'on incorpore les déchets polluants à un liant aqueux à base de ciment de laitier de haut-fourneau et/ou d'une poudre de produit à base de laitier mélangé à une poudre de silice fine et à au moins un composé du magnésium, du potassium ou de l'aluminium ainsi que défini dans la revendication 1.

Il s'est révélé que, d'une manière non encore expliquée, la présence selon l'invention de composés du magnésium, du potassium et/ou de l'aluminium dans le mélange permet d'éviter les perturbations provoquées par les oxydes ou les chlorures métalliques contenus dans les déchets polluants, comme cela se produit avec les procédés déjà connus qui ont été rappelés ci-dessus.

C'est ainsi que, conformément au procédé selon l'invention, on obtient un produit solide dont le temps de prise est sensiblement le même que celui d'un liant conventionnel qui n'aurait pas été mélangé à des déchets et dont la résistance à 28 jours est au moins égale à 10kg par cm2.

Il s'est également révélé qu'en mettant en oeuvre le procédé selon l'invention, les essais de lixiviation effectués selon la norme NF X31210 (déchets massifs) donnent des résultats nettement meilleurs qu'avec les procédés antérieurement connus, la fraction soluble totale étant inférieure à 5 %, la teneur en chlorures étant inférieure à 10g par kg de déchets traités et la teneur en métaux étant de l'ordre de 0 à 100 mg par kg de déchets.

On constate donc que, combiné à l'adjonction de silice en poudre fine, l'apport selon l'invention de magnésium, de potassium ou d'aluminium permet d'éviter les perturbations engendrées par les éléments contenus dans les déchets polluants.

On obtient ainsi une matrice compacte résistante et homogène qui n'est pas altérée par des phénomènes de gonflement exothermique qui font éclater les matrices classiques, surtout celles à base de ciment Portland.

De plus, l'examen des produits obtenus selon l'invention montre qu'ils ne donnent pas lieu à la formation de sels ou de cristaux gonflants qui sont très préjudiciables à l'intégrité de leur matrice.

Selon l'invention, la poudre fine de silice a une granulométrie inférieure à 10 microns. Elle est présente dans la composition de préférence entre 5 et 20% en poids par rapport au laitier de haut fourneau.

Selon l'invention les grains de liant ont une granulométrie comprise entre 0 et 200 microns et de préférence inférieure à 100 microns.

Selon l'invention les composés à base de magnésium peuvent par exemple être constitués par du chlorure de magnésium, par de la magnésie, par du sulfate de magnésium, ou par tout produit contenant des teneurs suffisantes de tels composés, lesquels sont susceptibles de former par exemple des oxychlorures de magnésium.

Le potassium peut par exemple être apporté par du sulfate de potassium ou tout autre produit contenant une teneur suffisante en potassium.

L'aluminium peut par exemple être apporté par du ciment fondu qui est à base d'alumine ou encore par de l'alumine ou tout autre produit en contenant.

Le mélange selon l'invention du liant et des composés à base de magnésium, de potassium et/ou d'aluminium peut être réalisé dans une assez large gamme de proportions s'étendant par exemple de 2 à 150 kg de composés à base de magnésium, de potassium et/ou d'aluminium pour 100 kg de ciment de laitier et/ou de poudre de produit à base de laitier.

Conformément à l'invention, de l'argile peut être également incorporée par exemple à une teneur d'environ 5 à 100 % en poids du mélange de liant.

Conformément à l'invention, il est également possible d'ajouter au mélange une certaine quantité de charbon actif pour favoriser la rétention des matières organiques. Ce charbon actif peut être par exemple ajouté dans une proportion de 0 à 20 % de l'ensemble des autres constituants.

Enfin, il est également possible d'ajouter au mélange des adjuvants classiques qui modifient la fluidité des liants, leur temps de prise et d'une manière générale la rhéologie du mélange.

Par poudre de base de laitier de haut fourneau, on entend selon l'invention un mélange contenant au moins environ 50% de laitier de haut fourneau.

Dans le but de mieux faire comprendre l'invention, on va en décrire maintenant à titre d'illustration et sans aucun caractère limitatif plusieurs modes de réalisations décrits ci-après à titre d'exemples :

### Exemple 1

Pour traiter 1000 kg de déchets industriels secs, on les mélange à :
- 100 à 300 kg de ciment de laitier
- 10 à 30 kg de poudre de silice de 10 microns
- 100 Kg de magnésie (apport de magnésium)
- 550 à 700 litres d'eau.

Après la prise du mélange décrit ci-dessus, on obtient un produit homogène solide qui ne laisse apparaître aucune fissure.

La résistance à 28 jours de ce produit est de 10 à 20 kg/cm2.

Le produit obtenu, lixivié selon la norme NF X31210, ne relargue que des effluants conformes à cette norme.

A titre de comparaison, si l'on incorpore les mêmes 1000 kg de déchets à 300 à 600 kg de ciment Portland, le produit obtenu se microfissure après quelques jours.

De surcroît, si les déchets polluants contiennent des oxydes métalliques, ce qui est fréquent, ce liant à base de ciment Portland ne parvient pas à faire sa prise, contrairement à la composition selon l'invention, qui possède un temps de prise identique à celui d'un liant classique sans déchets.

### Exemple 2

Pour traiter 1000 kg de déchets polluants secs, on les mélange avec :
- 200 à 500 kg de poudre à base de laitier de haut fourneau (contenant environ 60% de laitier)
- 100 à 200 kg de ciment fondu à base d'alumine (apport d'aluminium)
- 10 à 50 kg de poudre fine de silice
- 500 à 700 litres d'eau.

Après solidification, on obtient un produit qui présente sensiblement les mêmes caractéristiques que celles obtenues comme indiqué à l'exemple 1.

### Exemple 3

Pour traiter 1000 kg de boues polluantes de siccité 40 % contenant des polluants organiques, on les mélange à :
- 100 à 300 kg de ciment de laitier
- 20 à 50 kg de chlorure de magnésium (apport de magnésium)
- 5 à 60 kg de poudre fine de silice
- 5 kg d'argile
- 10 à 20 kg de charbon actif
- 200 à 300 litres d'eau.
- 5 kg d'additif constitué par une résine mélamine.

Lorsque la prise du mélange est effectuée, le produit obtenu atteint une résistance minimale de 10 kg par cm2 sans fissuration ni microfissuration.

A titre de comparaison, un produit témoin réalisé uniquement à partir de ciment n'arrive pas à faire prise.

Comme indiqué précédemment, l'argile a pour fonction de retenir les polluants métalliques alors que le charbon actif retient les polluants organiques.

Le produit obtenu, lixivié selon les normes actuellement en vigueur, ne relargue les polluants métalliques ou organiques qu'en dessous du seuil réglementaire.

### Exemple 4

Pour traiter 1000 kg de déchets polluants secs avec sulfate de potassium, on mélange :
- 200 à 500 kg de poudre de laitier
- 10 à 20 kg de chaux
- 10 à 20 kg de poudre fine de silice
- 10 à 20 kg de chlorure de magnésium (apport de magnésium)
- 20 à 30 kg de sulfate de potassium (apport de potassium)
- 5 à 10 Kg d'argile
- 400 à 500 litres d'eau
- 3 kg de gluconate (additif modérateur de vitesse de prise).

Ce mélange fait prise sans que la température atteigne 100°C. Au contraire, si l'on utilise un liant constitué par un ciment conventionnel, la masse obtenue s'échauffe et se fissure.

Le bloc obtenu selon l'invention, soumis à lixivation respecte les normes réglementaires, contrairement à un bloc réalisé avec un ciment conventionnel de type Portland.

### Example 5

Cet exemple permet de traiter des déchets contenant du Ca++ qui sont très réactifs sans qu'il y ait fissuration des blocs obtenus selon l'invention.

On part de 1000 kg de déchets réactifs.
- 300 à 500 kg de poudre de laitier
- 10 à 20 kg de sulfate de potassium (apport de potassium)
- 10 à 20 kg de ciment fondu (apport d'aluminium)
- 5 kg d'argile
- 10 à 50 kg de poudre fine de silice
- 400 à 500 litres d'eau
- 6 kg de lignosulfate qui joue le rôle de retardateur.

Cette formulation évite les montées en température qui provoquent la fissuration des blocs, dès que le volume dépasse une centaine de litres.

Avec un ciment habituel, les blocs éclatent et ne respectent pas la norme réglementaire.

### Exemple 6

Une variante de l'exemple 5 peut être réalisée en mélangeant :
- 200 à 300 kg de ciment de laitier
- 10 à 20 kg de ciment fondu (apport d'aluminium)
- 30 à 40 kg de chlorure de magnésium (apport de magnésium)
- 5 kg d'argile
- 10 kg de poudre fine de silice
- 400 à 500 litres d'eau
- 6 à 7 kg de retardateur à base de lignosulfate.

## Revendications

1. Procédé pour traiter des déchets polluants comprenant au moins un des composés suivants : des chlorures, des métaux lourds, des polluants organiques, des oxydes métalliques, ou du Ca⁺⁺ en les incorporant dans un liant pour former des blocs de volume important, **caractérisé par le fait que** l'on utilise un liant aqueux à base de ciment de laitier de haut-fourneau et/ou d'une poudre d'un produit à base de laitier de haut fourneau dont la granulométrie est inférieure à 200 µm, mélangé à une poudre fine de silice dont la granulométrie est inférieure à 10 µm et dont la teneur pondérale est comprise entre 5 et 20 % par rapport au laitier de haut fourneau et à au moins un composé du magnésium, du potassium ou de l'aluminium.

2. Procédé selon la revendication 1, **caractérisé par le fait que** le composé à base de magnésium contient du chlorure de magnésium.

3. Procédé selon la revendication 1, **caractérisé par le fait que** le composé à base de magnésium contient de la magnésie.

4. Procédé selon la revendication 1, **caractérisé par le fait que** le composé à base de magnésium contient du sulfate de magnésium.

5. Procédé selon la revendication 1, **caractérisé par le fait que** le composé à base de potassium contient du sulfate de potassium.

6. Procédé selon la revendication 1, **caractérisé par le fait que** le composé à base d'aluminium contient du ciment fondu ou de l'aluminate de sodium.

7. Procédé selon la revendication 1, **caractérisé par le fait que** le composé à base d'aluminium contient de l'alumine.

8. Procédé selon l'une quelconque des revendications précédentes, **caractérisé par le fait que** le mélange est réalisé dans des proportions comprises entre environ 2 et 150 kg de composés de magnésium, de potassium ou d'aluminium pour 100 kg de liant.

9. Procédé selon l'une quelconque des revendications précédentes, **caractérisé par le fait que** l'on introduit dans le mélange 5 à 100 % en poids d'argile par rapport au liant.

10. Procédé selon l'une quelconque des revendications précédentes, **caractérisé par le fait qu'**on introduit en outre du charbon actif dans le mélange.

## Patentansprüche

1. Verfahren zum Behandeln von umweltbelastenden Abfällen, welches wenigstens eine der folgenden Verbindungen aufweist: Chloride, Schwermetalle, organische Schadstoffe, Metalloxyde oder Ca++, wobei diese in ein Bindemittel eingebracht werden, um Blöcke mit großem Volumen auszubilden, **dadurch gekennzeichnet, daß** ein wasserhaltiges Bindemittel auf der Basis von Zement aus Hochofenschlacke und/oder aus einem pulversiertem Produkt auf der Basis von Hochofenschlacke, dessen Granulometrie unter 200 µm liegt, vermischt mit einem feinen Kieselerdepulver, dessen Granulometrie bei weniger als 10 µm liegt und dessen Gew% zwischen 5 und 20 % in Bezug auf die Hochofenschlacke liegt, und mit wenigstens einer Verbindung von Magnesium, Kalium oder Aluminium verwendet wird.

2. Verfahren nach Anspruch 1, **dadurch gekennzeichnet, daß** die Verbindung auf der Basis von Magnesium Magnesiumchlorid enthält.

3. Verfahren nach Anspruch 1, **dadurch gekennzeichnet, daß** die Verbindung auf der Basis von Magnesium Magnesiumoxid enthält.

4. Verfahren nach Anspruch 1, **dadurch gekennzeichnet, daß** die Verbindung auf der Basis von Magnesium Magnesiumsulfat enthält.

5. Verfahren nach Anspruch 1, **dadurch gekennzeichnet, daß** die Verbindung auf der Basis von Kalium Kaliumsulfat enthält.

6. Verfahren nach Anspruch 1, **dadurch gekennzeichnet, daß** die Verbindung auf der Basis von Aluminium Schmelzzement oder Natriumaluminat enthält.

7. Verfahren nach Anspruch 1, **dadurch gekennzeichnet, daß** die Verbindung auf der Basis von Aluminium Aluminiumoxyd enthält.

8. Verfahren nach einem der vorhergehenden Ansprüche, **dadurch gekennzeichnet, daß** das Gemisch mit Anteilen von ungefähr zwischen 2 bis 150 kg der Magnesium-, Kalium- oder Aluminiumverbindung auf 100 kg Bindemittel hergestellt wird.

9. Verfahren nach einem der vorhergehenden Ansprüche, **dadurch gekennzeichnet, daß** dem Gemisch 5 bis 100 Gew.% Ton bezogen auf das Bindemittel beigefügt werden.

10. Verfahren nach einem der vorhergehenden Ansprüche, **dadurch gekennzeichnet, daß** dem Gemisch zusätzlich Aktivkohle beigefügt wird.

## Claims

1. Process for treatment of pollutant waste comprising at least one of the following compounds: heavy metal chlorides, organic pollutants, metallic oxides, or Ca⁺⁺, by incorporating them in a binder to form blocks of large volume, **characterised by** the fact that an aqueous binder is used based on blast-furnace slag cement and/or a powder of a product based on blast-furnace slag, the granular dimension of which is less than 200 µm, mixed with a fine silica powder having a granular dimension of less than 10 µm and the content by weight of which is between 5 and 20% relative to the blast-furnace slag and at least one compound of magnesium, potassium, or aluminium.

2. Process as described in claim 1, **characterised by** the fact that the compound based on magnesium contains magnesium chloride.

3. Process as described in claim 1, **characterised by** the fact that the compound based on magnesium contains magnesia.

4. Process as described in claim 1, **characterised by** the fact that the compound based on magnesium contains magnesium sulphate.

5. Process as described in claim 1, **characterised by** the fact that the compound based on potassium contains potassium sulphate.

6. Process as described in claim 1, **characterised by** the fact that the compound based on aluminium contains alumina cement or sodium aluminate.

7. Process as described in claim 1, **characterised by** the fact that the compound based on aluminium contains alumina.

8. Process as described in any one of the preceding claims, **characterised by** the fact that the mixture is created in proportions of between approximately 2 and 150 kg of compounds of magnesium, potassium, or aluminium for 100 kg of binder.

9. Process as described in any one of the preceding claims, **characterised by** the fact that 5 to 100% by weight of clay, relative to the binder, are introduced into the mixture.

10. Process as described in any one of the preceding claims, **characterised by** the fact that active carbon is also introduced into the mixture.
